# EUROPEAN PATENT APPLICATION

(11) **EP 4 406 767 A1**
(43) Date of publication of application: **31.07.2024**
(21) Application number: 23153446.2
(22) Date of filing: 26.01.2023
(51) Int. Cl.: B60K 11/08

(54) **SHUTTER DEVICE FOR AN AIR PASSAGE OPENING**

(71) Applicant: Röchling Automotive SE, 68165 Mannheim (DE)
(72) Inventor: Besier, Holger, 65735 Oestrich-Winkel (DE)
(74) Representative: Ullrich & Naumann PartG mbB

(57) **Abstract**

The invention relates to a shutter device for an air passage opening, comprising
a carrier with at least one air passage opening through which air can flow,
at least one closing element, which is arranged on the carrier and which can be moved between at least two operating positions of different degrees of covering of the air passage opening, wherein the at least one closing element is flexible and can be moved between the at least two operating positions by means of a moving device,
at least one tensioning device designed to keep the at least one closing element in a tensioned state at least during movement by means of the moving device, wherein the at least one tensioning device comprises at least one spring element, a first connecting element for connection to a shaft for the at least one closing element and a second connecting element for connection to the moving device, wherein
the first connecting element comprises at least one guiding element and the second connecting element comprises at least one receiving element for receiving the at least one guiding element for a defined relative rotational movement of the first and second connecting element.

## Description

The invention relates to a shutter device for an air passage opening, comprising a carrier with at least one air passage opening through which air can flow, at least one closing element, which is arranged on the carrier and which can be moved between at least two operating positions of different degrees of covering of the air passage opening, wherein the at least one closing element is flexible and can be moved between the at least two operating positions by means of a moving device, at least one tensioning device designed to keep the at least one closing element in a tensioned state at least during movement by means of the moving device.

Although applicable to any kind of shutter device for an air passage opening, the invention will be explained with regard to a shutter device for an air passage opening in front of a car radiator.

Shutter devices for an air passage opening in front of a car radiator are well known. For instance DE 10 2019 105 781 A1 discloses a shutter device for covering a heat exchanger of a vehicle with at least one cable system. The cover of the heat exchanger is rolled down in front of the heat exchanger via this cable system by means of a drive element. The cable system is subjected to a tensile force, also referred to as pretension. The tensile force is applied by means of a bending spring or a torsion spring. Bending and torsion springs are not susceptible to environmental influences such as water, ice or snow. The cable system can further have a deflection roller, wherein the tensile force acts on the bearing of the deflection roller. The bending or torsion spring can act on the bearing of the deflection roller or on a fastening element located there.

Further, DE 10 2020 107 958 A1 discloses a device for regulating an air flow for a front-end module of a motor vehicle. The device comprises a closure element for closing air inlets of a front-end module of a motor vehicle, a guide element for guiding the closure element during an opening and a closing movement of the closure element, a first and a second control element for controlling an opening and a closing movement of the closure element, and a first and second drive element for driving an opening and a closing movement of the closure element. The first and second control element have a multi-part integrated tensioning and tolerance compensation mechanism for balancing a variable pre-tensioning of the first and second drive element in order to ensure a substantially constant tension of the closure element.

One of the disadvantages however is that these devices require much installation space. A further disadvantage is that the production costs are high.

It is therefore an objective of the present invention to provide a shutter device for an air passage opening, which can be easily and inexpensively manufactured. A further objective of the present invention is to provide a shutter device for an air passage opening, which requires less installation space. A further objective of the present invention is to provide an alternative shutter device.

The above-mentioned objectives may be accomplished by a shutter device for an air passage opening, comprising
a carrier with at least one air passage opening through which air can flow,
at least one closing element, which is arranged on the carrier and which can be moved between at least two operating positions of different degrees of covering of the air passage opening, wherein the at least one closing element is flexible and can be moved between the at least two operating positions by means of a moving device,
at least one tensioning device designed to keep the at least one closing element in a tensioned state at least during movement by means of the moving device, wherein the at least one tensioning device comprises at least one spring element, a first connecting element for connection to a shaft for the at least one closing element and a second connecting element for connection to the moving device,
characterized in that
the first connecting element comprises at least one guiding element and the second connecting element comprises at least one receiving element for receiving the at least one guiding element for a defined relative rotational movement of the first and second connecting element.

The above-mentioned objectives may be accomplished by a heat exchange system for a vehicle, comprising a heat exchanger and a shutter device according to one of the claims 1-11 for defined guiding of air to the heat exchanger.

The above-mentioned objectives may be accomplished by a vehicle, preferably with a combustion engine, comprising a heat exchange system according to claim 12.

One of the advantages that may be provided is that the construction space, in particular for the tensioning device, can be reduced. One of the further advantages that may be provided is that the production costs, in particular for the tensioning device, can be reduced.

Further features, advantages and preferred embodiments are disclosed or may become apparent in the following.

According to an embodiment, the at least one guiding element is provided in form of an axially extending projection and/or that the at least one receiving element is provided in form of an aperture. One of the advantages may be that arranging of the connecting elements is easier, allowing higher tolerances for the construction elements, i.e. here the connecting elements, while allowing a defined rotational movement.

According to a further embodiment, the connecting elements are arranged rotatably relative to one another with an absolute value for the angle of rotation between 0 degrees and 40 degrees, preferably between 10 degrees and 30 degrees, in particular between 20 degrees and 25 degrees. One of the advantages may be a sufficient degree of freedom, when mounting the elements on one another.

According to a further embodiment, the two connecting elements are arranged such that they can be acted upon by a spring force of the at least one spring element. One of the advantages may be that the spring is integrated in a compact manner providing the spring force within the construction volume of the two connecting elements.

According to a further embodiment, the at least one spring element is designed in the form of a torsion spring, in particular a leg spring. One of the advantages may be that a high resistance against environmental influences can be provided, while allowing an easy integration between the two connecting elements.

According to a further embodiment, the first and second connecting elements are, preferably detachably, fixable to each other, preferably in axial direction of axes of the first and second connecting element. One of the advantages may be that an easy assembling, preferably in axial direction, and if applicable disassembling in the case of maintenance can be provided.

According to a further embodiment, the at least one guiding element and the at least one receiving element are arranged such to provide a snap-in or clip connection. This allows a fast and easy fixing of the first and second connecting element on one another.

According to a further embodiment, the shutter device comprises several closing elements, in particular two closing elements, which are arranged on different sides of the carrier. One of the advantages may be that a plurality of air passage openings can be opened and closed with a single shutter device.

According to a further embodiment, the at least one closing element is made of textile material, in particular in form of a textile foil. One of the advantages may be that a reliable closing of the air passage opening can be provided.

According to a further embodiment, the shutter device comprises two air passage openings, wherein each air passage opening has a closing element, wherein the two closing elements are each actuable by means of the moving device, in particular simultaneously, between the respective at least two operating positions. One of the advantages may be that the construction space can be further reduced, since the closing elements can be operated by a common moving device.

According to a further embodiment, a direction of movement of the at least one closing element, in particular of the two closing elements, is oriented perpendicularly to a shaft of the tensioning device. One of the advantages may be that an easy assembly and a reliable operation of the closing elements can be provided.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawings
- Fig. 1: shows schematically a shutter device according to an embodiment of the present invention;
- Fig. 2: shows schematically in an exploded view a tensioning device according to an embodiment of the present invention;
- Fig. 3: shows schematically the tensioning device of Fig. 2 in assembled condition;
- Fig. 4: shows schematically a shutter device according to an embodiment of the present invention; and
- Fig. 5: shows schematically in an exploded view a tensioning device according to an embodiment of the present invention.

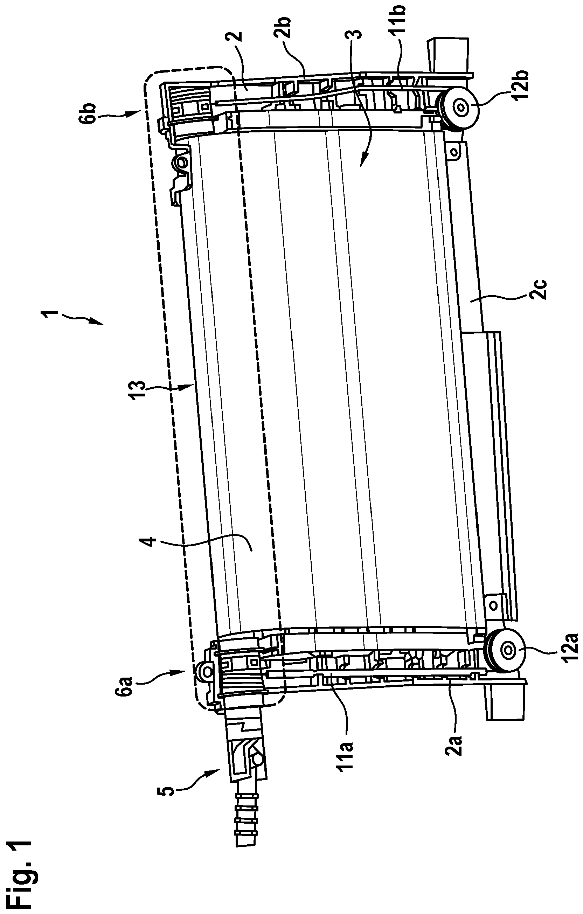

Figure 1 shows schematically a shutter device according to an embodiment of the present invention.

In detail, Figure 1 shows a shutter device 1. The shutter device 1 comprises a U-shaped carrier 2, wherein between the two vertical legs 2a, 2b of the "U" connected by the base leg 2c of the "U", an air passage opening 3 is provided. At the open side of the "U", i.e. opposite of the base leg 2c, a winding shaft 13 is arranged such that an essentially rectangular air passage opening 3 is provided, defined by the U-shaped carrier 2 and the winding shaft 13. On the winding shaft 13 a closing element in form of a textile foil 4 is provided, which can be rolled up or unrolled from the winding shaft 13. Figure 1 shows the textile foil 4 totally covering the air passage opening 3. The textile foil 4 is guided by two cables 11a, 11b, each along one leg 2a, 2b of the carrier 2. For guiding the cable 11a, 11b on each leg 2a, 2b, a deflection roller 12a, 12b is arranged near the base leg 2c on both sides of the base leg 2c. Further, a tensioning device 6a, 6b for each cable 11a, 11b is arranged next to both sides of the winding shaft 13. The tensioning device 6a shown on the left side is connected to a moving device 5 for operating the shutter device 1. The moving device 5 is only partially shown and comprises here a shaft, which can be coupled to a motor or the like, which is not shown here. The tensioning device 6a is connected to the winding shaft 13 and on the opposite side of the winding shaft 13 - right side in Figure 1 - the winding shaft 13 is connected to the second tensioning device 6b. When the moving device 5 is operated, then the textile foil 4 can by moved up and down to open, open partially or close the air passage opening 3.

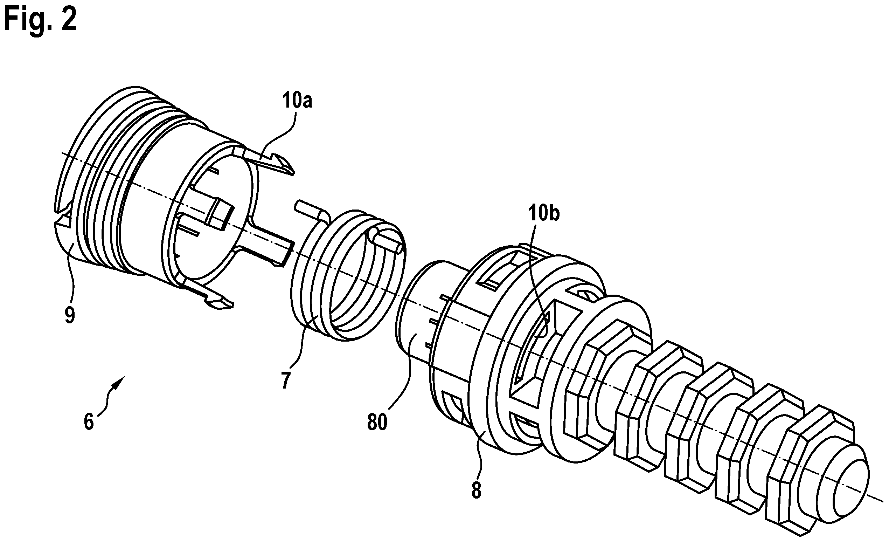

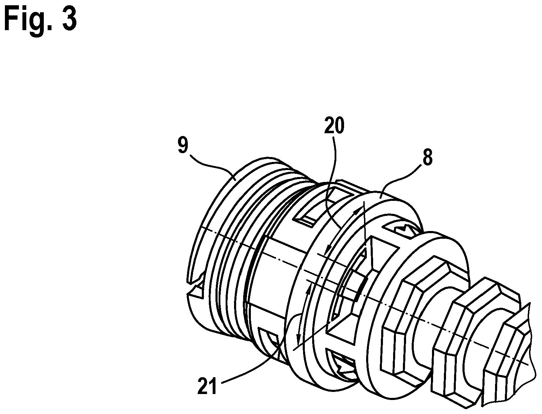

Figure 2 shows schematically in an exploded view a tensioning device according to an embodiment of the present invention and Figure 3 shows schematically the tensioning device of Figure 2 in assembled condition.

In Figure 2 a tensioning device 6 is shown. The tensioning device 6 comprises a winding core 9 as first connecting element and a winding shaft end part 8 as second connecting element. Between the winding core 9 and the winding shaft end part 8 a leg spring 7 is arranged such to provide a rotational spring force between the winding core 9 and the winding shaft end part 8. The winding core 9 is rotatably mounted in the winding shaft end part 8. For this, the winding core 9 comprises four guiding elements in form of snap hooks 10a axially protruding in direction of the winding shaft end part 8 and equally distributed in the circumferential direction of the winding core 9. The winding shaft end part 8 in turn comprises four receiving elements in form of apertures 10b, which are adapted to receive the snap hooks 10a of the winding core 9. Further, the apertures 10b each have an extension in circumferential direction and may allow a limited movement of the snap hooks 10a in circumferential direction within the apertures 10b of a torsion angle 20 of +/- 20 degree and a torsion path 21 of +/- 3mm with regard to the center of the apertures 10b. The leg spring 7 is rotatably mounted with one end each plugged into the winding core 9 and the winding shaft end part 8. The leg spring 7 can be mounted in a pre-tensioned manner or in nominal zero position between winding core 9 and winding shaft end part 8.

The winding core 9 comprises on its outer circumferential surface with a partially decreasing diameter towards the winding shaft end part a spiral recess to receive a cable, when the textile foil 4 is moved between different operating positions. The winding shaft end part 8 comprises an axially protruding cylinder 80 in the direction to the winding core 9 for receiving and guiding the leg spring 7. The length of the cylinder 80 corresponds to the axial length of the leg spring 7 without the legs. On the opposite side, the winding shaft end part 8 comprises several polygonal shaped ribs on its circumferential surface to allow connection to the winding shaft 13.

The snap connection via snap hooks 10a and apertures 10b can be replaced by extensions instead of the snap hooks 10a, when a dedicated retaining within the apertures 10b is not desired. Further, the number of snap hooks 10a can be any ranging from one, two, three, four (as shown), five, six etc. depending on external requirements.

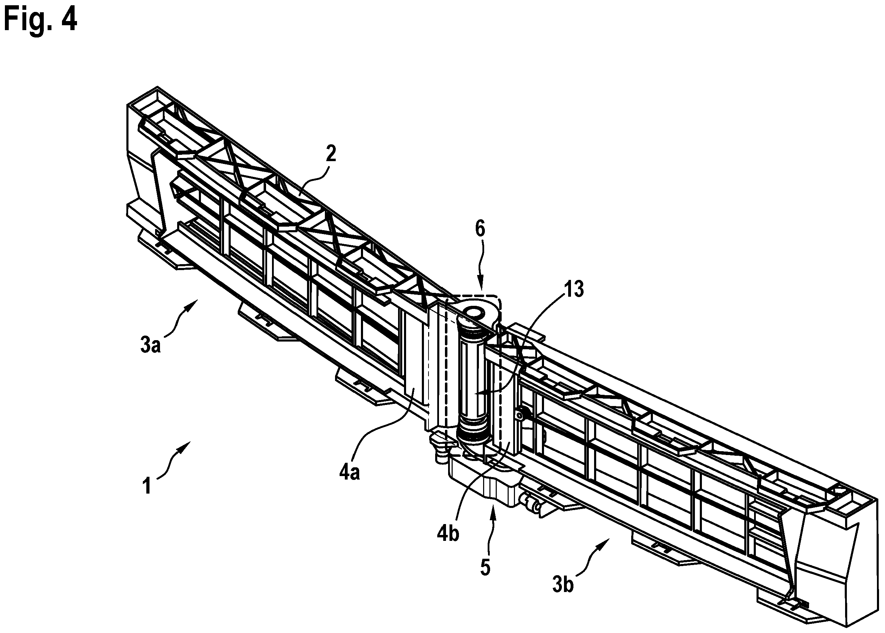

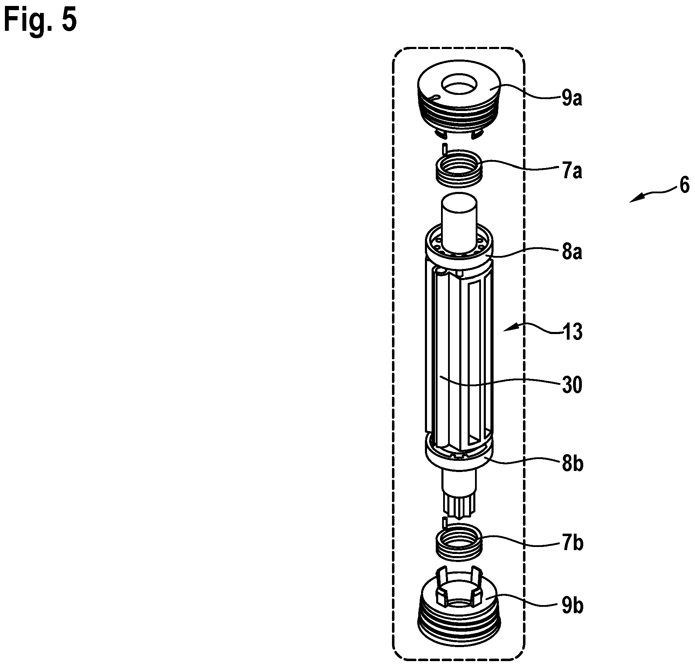

Figure 4 shows schematically a shutter device according to an embodiment of the present invention and Figure 5 shows schematically in an exploded view a tensioning device for the shutter device of Figure 4.

In Figure 4 a shutter device 1 is shown, comprising a carrier 2 with two air passage openings 3a, 3b. The two air passage openings 3a, 3b can each be opened and closed with a corresponding separate textile foil 4a, 4b. Between the two openings 3a, 3b a common winding shaft 13 is arranged for receiving both textile foils 4a, 4b. In Figure 4 underneath the carrier 2, a motor 5 is arranged and connected to the winding shaft 13. When the motor 5 is operated, both air passage openings 3a, 3b can simultaneously be opened or closed.

In Figure 5 a detailed view of the tensioning device 6 of Figure 4 is shown. On opposite sides of the winding shaft 13, a winding shaft end part 8a, 8b, a leg spring 7a, 7b and a winding core 9a, 9b is arranged. In this embodiment, the winding shaft end parts 8a, 8b are integral part of the winding shaft 13. However, the winding shaft end parts 8a, 8b can also be separately produced and in particular detachably connected to the winding shaft 13. On its outer circumference, the winding shaft 13 comprises two clamping devices 30 for clamping the textile foils 4a, 4b. The clamping devices 30 are arranged 180 degree offset to each other and extend along the axis of the winding shaft 13.

The winding core 9, the winding shaft end part 8 and the winding shaft 13 can be made of plastic, in particular polyamide or the like. The leg spring 7 can be made of steel, in particular stainless steel or sheet metal or the like.

At least one embodiment may provide at least one of the following features and/or at least one of the following advantages:
- Easy and less cost-intensive manufacturing.
- Reduced construction space.
- Easy assembling and disassembling.
- Operation of two closing elements simultaneously.
- Easy integration.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Shutter device
- 2: Carrier
- 2a, 2b: Legs of the carrier
- 2c: Base leg
- 3, 3a, 3b: Air passage opening
- 4, 4a, 4b: Textile foil
- 5: Moving device/motor
- 6, 6a, 6b: Tensioning device
- 7, 7a, 7b: Leg spring
- 8, 8a, 8b: Winding shaft end part
- 9, 9a, 9b: Winding core
- 10a: Snap hooks
- 10b: Apertures
- 11a, 11b: Cable
- 12a, 12b: Deflection roller
- 13: Winding shaft

- 20: Torsion angle
- 21: Torsion path

- 30: Clamping device

- 80: Cylinder

## Claims

1. Shutter device (1) for an air passage opening (3, 3a, 3b), comprising
a carrier (2) with at least one air passage opening (3, 3a, 3b) through which air can flow,
at least one closing element (4, 4a, 4b), which is arranged on the carrier (2) and which can be moved between at least two operating positions of different degrees of covering of the air passage opening (3, 3a, 3b), wherein the at least one closing element (4, 4a, 4b) is flexible and can be moved between the at least two operating positions by means of a moving device (5),
at least one tensioning device (6, 6a, 6b) designed to keep the at least one closing element (4, 4a, 4b) in a tensioned state at least during movement by means of the moving device (5), wherein the at least one tensioning device (6, 6a, 6b) comprises at least one spring element (7, 7a, 7b), a first connecting element (9, 9a, 9b) for connection to a shaft for the at least one closing element (4, 4a, 4b) and a second connecting element (8, 8a, 8b) for connection to the moving device (5),
**characterized in that**
the first connecting element (9, 9a, 9b) comprises at least one guiding element (10a) and the second connecting element (8, 8a, 8b) comprises at least one receiving element (1 0b) for receiving the at least one guiding element (10a) for a defined relative rotational movement of the first and second connecting element (9, 9a, 9b; 8, 8a, 8b).

2. Shutter device (1) according to claim 1, **characterized in that** the at least one guiding element (10a) is provided in form of an axially extending projection and/or that the at least one receiving element (10b) is provided in form of an aperture.

3. Shutter device (1) according to claim 1 or 2, **characterized in that** the connecting elements (9, 9a, 9b; 8, 8a, 8b) are arranged rotatably relative to one another with an absolute value for the angle of rotation between 0 degrees and 40 degrees, preferably between 10 degrees and 30 degrees, in particular between 20 degrees and 25 degrees.

4. Shutter device (1) according to one of the claims 1-3, **characterized in that** the two connecting elements (9, 9a, 9b; 8, 8a, 8b) are arranged such that they can be acted upon by a spring force of the at least one spring element (7, 7a, 7b).

5. Shutter device (1) according to one of the claims 1-4, **characterized in that** the at least one spring element (7, 7a, 7b) is designed in the form of a torsion spring, in particular a leg spring.

6. Shutter device (1) according to one of the claims 1-5, **characterized in that** the first and second connecting elements (9, 9a, 9b; 8, 8a, 8b) are, preferably detachably, fixable to each other, preferably in axial direction of axes of the first and second connecting element (9, 9a, 9b; 8, 8a, 8b).

7. Shutter device (1) according to one of the claims 1-6, **characterized in that** the at least one guiding element (10a) and the at least one receiving element (10b) are arranged such to provide a snap-in or clip connection.

8. Shutter device (1) according to one of the claims 1-7, **characterized in that** the shutter device (1) comprises several closing elements (4, 4a, 4b), in particular two closing elements (4a, 4b), which are arranged on different sides of the carrier (2).

9. Shutter device (1) according to one of the claims 1-8, **characterized in that** the at least one closing element (4, 4a, 4b) is made of textile material, in particular in form of a textile foil.

10. Shutter device (1) according to one of the claims 1-9, **characterized in that** the shutter device (1) comprises two air passage openings (3a, 3b), wherein each air passage opening (3a, 3b) has a closing element (4a, 4b), wherein the two closing elements (4a, 4b) are each actuable by means of the moving device (5), in particular simultaneously, between the respective at least two operating positions.

11. Shutter device (1) according to one of the claims 1-10, **characterized in that** a direction of movement of the at least one closing element (4, 4a, 4b), in particular of the two closing elements (4a, 4b), is oriented perpendicularly to a shaft of the tensioning device (6, 6a, 6b).

12. Heat exchange system for a vehicle, comprising a heat exchanger and a shutter device (1) according to one of the claims 1-11 for defined guiding of air to the heat exchanger.

13. Vehicle, preferably with a combustion engine, comprising a heat exchange system according to claim 12.
